# EUROPEAN PATENT APPLICATION

(11) **EP 1 758 005 A1**
(43) Date of publication of application: **28.02.2007**
(21) Application number: 05739031.2
(22) Date of filing: 06.05.2005
(51) Int. Cl.: G05B 23/02, H04B 7/26, H04L 12/28

(54) **COMMUNICATION SYSTEM AND COMMUNICATION EQUIPMENT**

(30) Priority: 18.05.2004 JP 2004147397
(71) Applicant: Yokogawa Electric Corporation, Tokyo 180-8750 (JP)
(72) Inventor: OGAWA, Toshiki, c/o YOKOGAWA ELECTRIC CORPORATION, Musashino-shi, Tokyo 1808750 (JP); TOMITA, Toshiro c/o YOKOGAWA ELECTRIC CORPORATION, Musashino-shi, Tokyo 1808750 (JP); HOSHI, Tetsuo,. c/o YOKOGAWA ELECTRIC CORPORATION, Musashino-shi, Tokyo 1808750 (JP); DEMACHI, Koji, c/o YOKOGAWA ELECTRIC CORPORATION, Musashino-shi, Tokyo 1808750 (JP); TAKAHASHI, Hirofumi YOKOGAWA ELECTRIC CORPORATION, Musashino-shi, Tokyo 1808750 (JP); SAITO, Yoji, c/o YOKOGAWA ELECTRIC CORPORATION, Musashino-shi, Tokyo 1808750 (JP); NOGUCHI, Masanori, YOKOGAWA ELECTRIC CORPORATION, Musashino-shi, Tokyo 1808750 (JP)
(74) Representative: Grünecker, Kinkeldey, Stockmair & Schwanhäusser Anwaltssozietät
(86) International application number: PCT/JP2005/008736
(87) International publication number: WO 2005/111753

(57) **Abstract**

A field device is connected to a communication apparatus installed in a communication system. The communication apparatus performs radio communication with a control apparatus which controls a plant where the field device is installed, in accordance with a standardized communication protocol, and relays the communication between the field device and the control apparatus.

## Description

### <Technical Field>

The invention relates to a communication apparatus to which a field device is connected, and which relays communication between the field device and a control apparatus for controlling a plant where the field device is installed, and also to a communication system having the communication apparatus.

### <Background Art>

Field devices are installed in plants of petrochemistry, iron and steel, pulp and paper, food, medicals, electric power, and the like. Such a plant is controlled by a distributed control system.

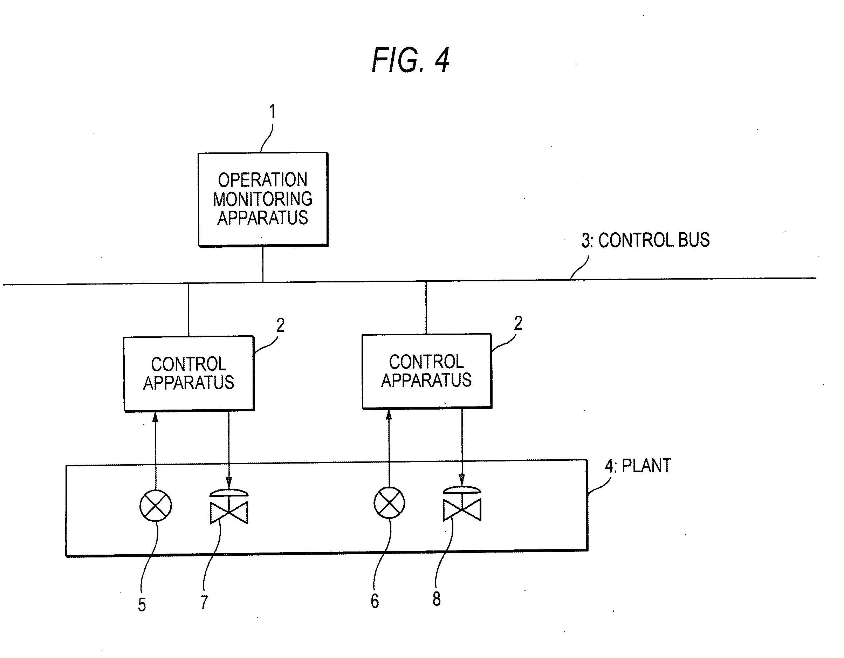

Fig. 4 is a diagram showing an exemplary configuration of a usual distributed control system.

In Fig. 4, an operation monitoring apparatus 1 and control apparatuses 2 are connected to a control bus 3. The control apparatuses 2 control a plant 4 under the monitoring of the operation monitoring apparatus 1. The operation monitoring apparatus 1 performs a running operation and a monitoring of the plant. The operation monitoring apparatus 1 displays contents for performing a control operation and monitoring, on its screen. Depending on the scale of the plant, plural control apparatuses are distributed in the plant. Via the control bus 3, the operation monitoring apparatus 1 and the control apparatuses 2 communicate with each other, thereby controlling the plant.

Sensor apparatuses 5, 6 installed in the plant 4 detect process values such as a temperature, a pressure, and a liquid level. Openings of valves 7, 8 are controlled by operation signals supplied from the control apparatus 2. Analog signals of 4 to 20 mA and 1 to 5 V output from the sensor apparatuses 5, 6 are input into the control apparatus 2. Based on the inputs, a control unit (not shown) in the control apparatus 2 performs control calculations, and obtains operation amounts. The operation amounts are output as analog signals of 4 to 20 mA and 1 to 5 V. By means of this output, the openings of the values 7, 8 are controlled. For example, by controlling the valve opening of a reaction vessel, process amounts such as a temperature and a pressure are controlled.

Sensor devices for detecting process values such as a temperature, a pressure and a liquid level, a valve positioner for controlling the valves, and the like are referred to as field devices.

The field device and the control apparatus perform communication in such a manner that the field device transmits a process value to the control apparatus, and the control apparatus transmits an operation amount to the field device.

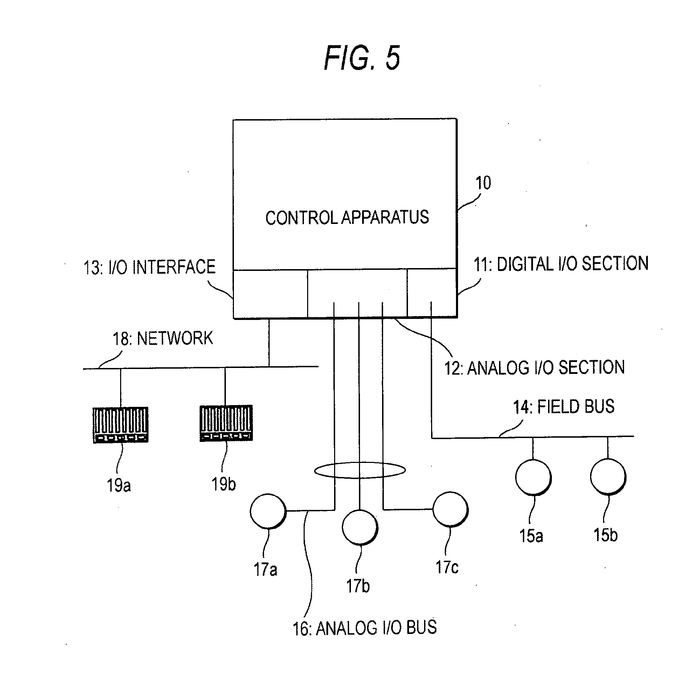

Fig. 5 is a diagram showing an example of a connection configuration between field devices and a control apparatus in the conventional art.

In Fig. 5, a control apparatus 10 corresponds to the control apparatus 2 in Fig. 4. The control apparatus 10 is provided with digital I/O section 11 (input and output are referred to as. I/O), analog I/O section 12, and an I/O interface 13.

A field bus 14 is connected to the digital I/O section 11. Field devices 15a, 15b which are field-bus-compliant are connected to the field bus 14.

An analog I/O bus 16 is connected to the analog I/O section 12. Analog-compliant field devices 17a to 17c are connected to the analog I/O bus 16.

A general-purpose network 18 such as Ethernet (registered trademark) is connected to the I/O interface 13. PLCs (Programmable Logic Controllers) .19a, 19b are connected to the network 18.

JP-A-2003-134030 discloses a communication system in which a field device performs radio communication via a communication relay device.

When a field device which is not compliant with radio communication is connected to the control apparatus as in the related art of Fig. 5, wiring between the field device and the control apparatus is required.

The cost of wiring between the field device and the control apparatus is a problem on system architecture. In order to reduce the wiring cost, it is effective that radio communication is established between the field device and the control apparatus. However, the radio communication is not realized in the above-described related art because of the following reasons:
(a) many field devices are not compliant with radio communication; and
(b) in order to obtain a signal from a field device which is compliant with radio communication into the control apparatus, it is necessary that an input/output interface portion of the control apparatus must comply with radio standards.

### <Disclosure of the Invention>

It is an object of the invention to provide a communication apparatus which performs radio communication with a control apparatus in accordance with a standardized communication protocol, and a communication system having the communication apparatus.

The invention provides a communication system comprising:
a communication apparatus to which a field device is connected,
wherein the communication apparatus performs radio communication in accordance with a standardized communication protocol with a control apparatus for controlling a plant where the field device is installed, and relays communication between the field device and the control apparatus.

In the communication system, the control apparatus has:
an input/output interface for inputting and outputting a signal in accordance with the standardized communication protocol; and
a radio access point which is connected to the input/output interface, and which performs radio communication in accordance with the standardized communication protocol.

In the communication system, the communication apparatus converts an input signal from the field device into digital data, attaches an address assigned to each field device to the digital data, and transmits the digital data by radio to the control apparatus via a radio interface.

In the communication system, the communication apparatus receives an operation signal by radio from the control apparatus, converts the operation signal depending on a type of a destination field device, and transmits the converted operation signal to a field device which is specified by an address attached to the operation signal.

In the communication system, the address is an IP address.

In the communication system, the communication apparatus performs radio communication with the control apparatus by TCP/IP.

In the communication system, the field device is connected to the communication apparatus via at least one of a digital input/output bus, an analog input/output bus and a field bus.

In the communication system, the radio interface is a radio physical layer interface of an OSI hierarchical model.

In the communication system, the communication apparatus is connected to the control apparatus also by wire to relay communication between the field device and the control apparatus via wire communication.

The communication system has a switching portion which switches the communication between the communication apparatus and the control apparatus, between wire communication and radio communication depending on a condition of a communication path.

The invention also provides a communication system comprising:
a plurality of radio communication apparatuses to which field devices are connected, which perform radio communication by a standardized communication protocol,
wherein radio communication is performed among the plurality of radio communication apparatuses in an ad-hoc mode, and
communication between field devices which are connected to different radio communication apparatuses is relayed.

The invention also provides a communication apparatus to which a field device is connected, wherein the communication apparatus performs radio communication by a standardized communication protocol with a control apparatus for controlling a plant where the field device is installed, and relays communication between the field device and the control apparatus.

The invention also provides a communication apparatus to which a field device is connected, and which performs radio communication by a standardized communication protocol,
wherein the communication apparatus performs radio communication with another radio communication apparatus in an ad-hoc mode, and relays communication between the field device connected to the radio communication apparatus and a field device connected to the another radio communication apparatus.

According to the above-described communication system and the radio apparatus, the following effects can be attained.
(1) A communication apparatus which performs radio communication with a control apparatus in accordance with a standardized communication protocol relays the communication between a field device and the control apparatus. Accordingly, the field device and the control apparatus can be connected by radio, even when the control apparatus does not have a configuration complying with dedicated radio standards.
(2) Since the field device and the control apparatus are connected with each other by radio, wiring cost can be reduced.
(3) The communication system has a plurality of radio communication apparatuses to which field devices are connected, and which perform radio communication by using standardized communication protocols, and radio communication is mutually performed in an ad-hoc mode between the plural radio communication apparatuses. Accordingly, in the case of field devices in which control logics are incorporated such as field devices which are compliant with field bus, data can be directly given and received between the field devices, and the control logics between the field devices can cooperatively operate.

### <Brief Description of Drawings>

Fig. 1 is a diagram showing a configuration of an embodiment of the invention;
Fig. 2 is a diagram showing a specific example of the configuration of a radio relay apparatus of Fig. 1;
Fig. 3 is a diagram showing a configuration of another embodiment of the invention;
Fig. 4 is a diagram showing an exemplary configuration of a usual distributed control system; and
Fig. 5 is a diagram showing an example of a connection configuration between field devices and a control apparatus in the conventioanl art.

### <Best Mode for Carrying Out the Invention>

Hereinafter, embodiments of the invention will be described in detail with reference to the accompanying drawings.

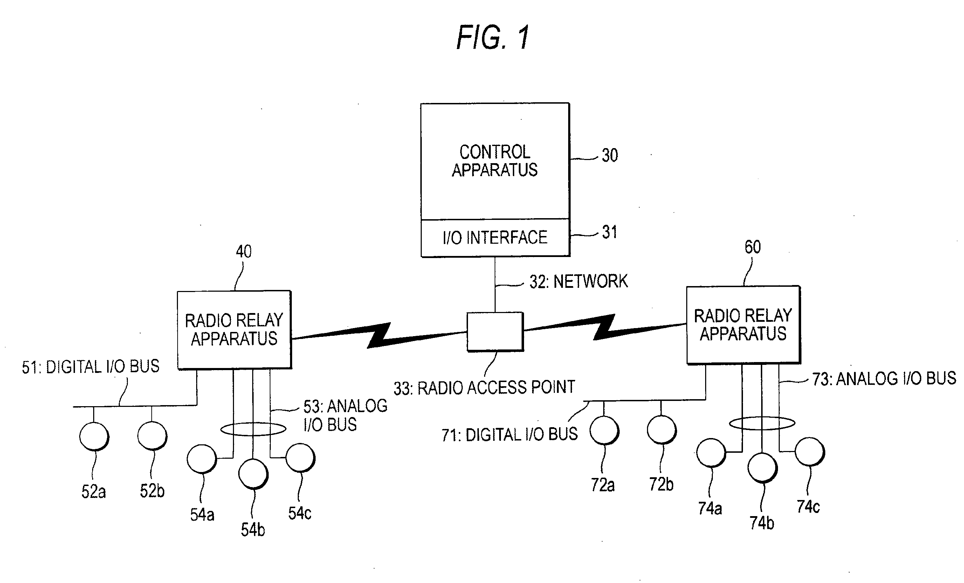

Fig. 1 is a diagram showing the configuration of an embodiment of the communication system of the invention.

In Fig. 1, a control apparatus 30 corresponds to the control apparatus 2 in Fig. 4. The control apparatus 30 is provided with an I/O interface 31. To the I/O interface 31, a radio access point 33 is connected via a general-purpose network 32 such as Ethernet (registered trademark). A radio communication system utilized by the I/O interface 31 and the radio access point 33 is a system which is commonly used in office environments, such as IEEE 802.11a/b/g.

The I/O interface 31 inputs and outputs signals by using standardized communication protocols. The radio access point 33 performs radio communication by standardized communication protocols.

A digital I/O bus 51 is connected to a radio relay apparatus 40. For example, the digital I/O bus 51 is a field bus. Field devices 52a, 52b which are compliant with a field bus are connected to the digital I/O bus 51. In addition, an analog I/O bus 53 is connected to the radio relay apparatus 40. Analog-compliant field devices 54a to 54c are connected to the analog I/O bus 53.

The radio relay apparatus 40 performs radio communication with the control apparatus 30 by the standardized communication protocols, thereby relaying the communication between the field devices 52a, 52b, and 54a to 54c, and the control apparatus 30.

A radio relay apparatus 60, a digital I/O bus 71, an analog I/O bus 73, and field devices 72a, 72b, 74a to 74c have the same configurations as those of the radio relay apparatus 40, the digital I/O bus 51, the analog I/O bus 53, and the field devices 52a, 52b, 54a to 54c.

The radio communication system of the radio relay apparatus 40 is a system which is commonly used in the office environments, such as IEEE 802.11a/b/g. Therefore, the control apparatus 30 functions as a general-purpose access point, so that the control apparatus 30 can easily transmit and receive communication data via radio network. The control apparatus 30 is not equipped with a special radio apparatus. In the control apparatus, by contrast, a general purpose interface such as Ethernet (trademark) interface is combined with a genaral-purpose radio LAN (Local Area Network) access point used in offices, thereby enabling the control apparatus to obtain data of the field devices via the radio relay apparatus.

The control apparatus 30 utilizes TCP/IP (Transmission Control Protocol/Intexnet Protocol) as an upper level protocol of Ethernet (registered trademark), and virtually assigns IP (Internet Protocol) addresses to field devices, thereby identifying the field devices.

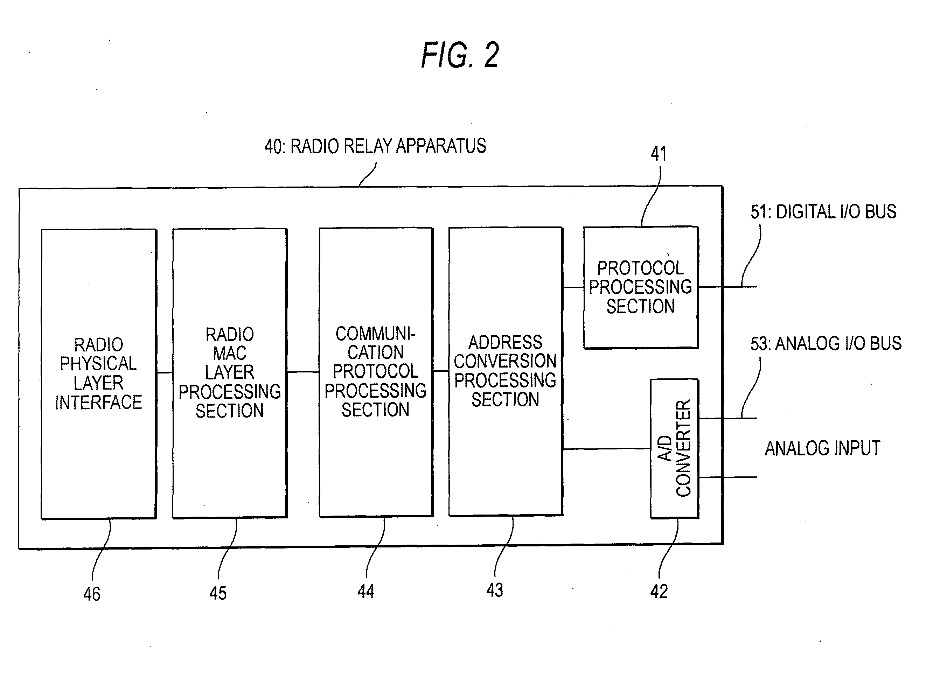

Fig. 2 is a diagram showing a specific example of the configuration of the radio relay apparatus of Fig. 1.

The radio relay apparatus 40 will be described as an example.

Protocol processing section 41 receives communication data via the digital I/O bus 51, and obtains data as a result of processing performed in accordance with communication protocols.

An analog-digital converter 42 converts an analog input from the analog I/O bus 53 into a digital input.

The data obtained by the protocol processing section 41 and the analog-digital converter 42 are input into address conversion processing section 43. The address conversion processing section 43 attaches a virtual IP address assigned to each field device that are connected by wire, to the input data, and then supplies the data to communication protocol processing section 44.

The communication protocol processing section 44 attaches the input data to a communication frame according to the communication protocol (for example, TCP/IP) used by the control apparatus 30, and then supplies the communication frame to radio MAC (Media Access Control) layer processing section 45.

The radio MAC layer processing section 45 superimposes the input data on the communication frame according to the radio communication protocol, and then transmits the communication frame to a radio network 47 via a radio physical layer interface 46. The communication frame is transmitted to the radio access point 33 via the radio network 47. The physical layer of the radio physical layer interface 46 is a physical layer of an OSI (Open Systems Interconnection) hierarchical model.

Processing except for the processing in the analog-digital converter 42 and the radio physical layer interface 46 can be realized by a combination of programs stored in a memory and a microprocessor.

As described above, the radio relay apparatus 40 converts the input signal from the field device into digital data, attaches the address assigned to each field device to the digital data, and then transmits the digital data by radio to the control apparatus 30 via the radio interface.

The radio relay apparatus 40 receives an operation signal by radio from the control apparatus 30, converts the operation signal depending on the type of the destination field device, and transmits the converted operation signal to the field device which is specified by the address attached to the operation signal.

The radio relay apparatus 60 performs the communication in the same manner as the radio relay apparatus 40.

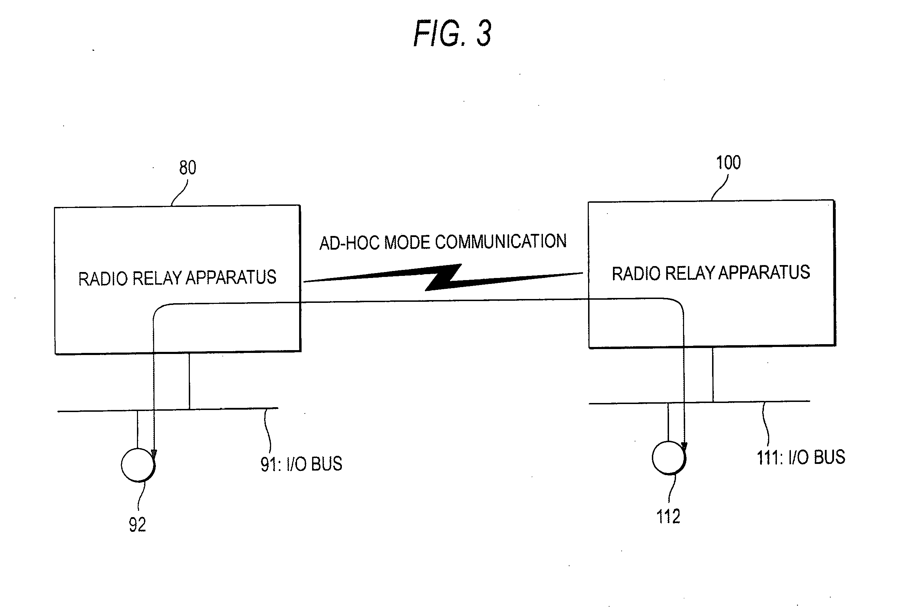

Fig. 3 is a diagram showing a configuration of another embodiment of the invention.

In the embodiment of Fig. 1, the data of the field device is transmitted to the control apparatus. By contrast, in the embodiment of Fig. 3, communication is mutually performed between devices.

In Fig. 3, a field device 92 is connected to a radio relay apparatus 80 via an I/O bus 91 such as a digital I/O bus and an analog I/O bus described above. Similarly, a field device 112 is connected to a radio relay apparatus 100 via an I/O bus 111 such as a digital I/O bus and an analog I/O bus.

In the case of field devices in which control logics are incorporated such as field devices which are compliant with field bus, the control logics between apparatuses may sometimes cooperatively operate. In such a case, it is necessary to perform communication between the field devices.

In the case where communication between field devices is required, it is possible to directly give and receive data between the field devices by performing radio communication in an ad-hoc mode between the radio relay apparatuses 80, 100 as shown in Fig. 3.

Alternatively, the radio relay apparatuses 40, 60 shown in Fig. 1 may be connected not only by radio but also by wire with the control apparatus 30, and the radio relay apparatus 40, 60 may relay communication between the field devices and the control apparatus 30 via the wire communication.

In such a case, each of the radio relay apparatuses 40, 60 and the control apparatus 30 may have a switching portion which switches the communication between the radio relay apparatus 40 or 60 and the control apparatus 30 between the wire communication and the radio communication depending on the conditions of the communication path.

### Fig. 1

- 30: CONTROL APPARATUS
- 31: I/O INTERFACE
- 32: NETWORK
- 33: RADIO ACCESS POINT
- 40: RADIO RELAY APPARATUS
- 51: DIGITAL I/O BUS
- 53: ANALOG I/O BUS
- 60: RADIO RELAY APPARATUS
- 71: DIGITAL I/O BUS
- 73: ANALOG I/O BUS

### Fig. 2

- 40: RADIO RELAY APPARATUS
- 41: PROTOCOL PROCESSING SECTION
- 42: A/D CONVERTER
- 43: ADDRESS CONVERSION PROCESSING SECTION
- 44: COMMUNICATION PROTOCOL PROCESSING SECTION
- 45: RADIO MAC LAYER PROCESSING SECTION
- 46: RADIO PHYSICAL LAYER INTERFACE
- 51: DIGITAL I/O BUS
- 53: ANALOG I/O BUS
- a: ANALOG INPUT

### Fig. 3

- 80: RADIO RELAY APPARATUS
- 91: I/O BUS
- 100: RADIO RELAY APPARATUS
- 111: I/O BUS
- a: AD-HOC MODE COMMUNICATION

### Fig. 4

- 1: OPERATION MONITORING APPARATUS
- 2: CONTROL APPARATUS
- 3: CONTROL BUS
- 4: PLANT

### Fig. 5

- 10: CONTROL APPARATUS
- 11: DIGITAL I/O SECTION
- 12: ANALOG I/O SECTION
- 13: I/O INTERFACE
- 14: FIELD BUS
- 16: ANALOG
- 18: NETWORK

## Claims

1. A communication system comprising:
a communication apparatus to which a field device is connected,
wherein the communication apparatus performs radio communication in accordance with a standardized communication protocol with a control apparatus for controlling a plant where the field device is installed, and relays communication between the field device and the control apparatus.

2. The communication system according to claim 1, wherein the control apparatus has:
an input/output interface for inputting and outputting a signal in accordance with the standardized communication protocol ; and
a radio access point which is connected to the input/output interface, and which performs radio communication in accordance with the standardized communication protocol.

3. The communication system according to claim 1, wherein the communication apparatus converts an input signal from the field device into digital data, attaches an address assigned to each field device to the digital data, and transmits the digital data by radio to the control apparatus via a radio interface.

4. The communication system according to claim 1, wherein the communication apparatus receives an operation signal by radio from the control apparatus, converts the operation signal depending on a type of a destination field device, and transmits the converted operation signal to a field device which is specified by an address attached to the operation signal.

5. The communication system according to claim 3, wherein the address is an IP address.

6. The communication system according to claim 4, wherein the address is an IP address.

7. The communication system according to claim 1, wherein the communication apparatus performs radio communication with the control apparatus by TCP/IP.

8. The communication system according to claim 1, wherein the field device is connected to the communication apparatus via at least one of a digital input/output bus, an analog input/output bus and a field bus.

9. The communication system according to claim 3, wherein the radio interface is a radio physical layer interface of an OSI hierarchical model.

10. The communication system according to claim 1, wherein the communication apparatus is connected to the control apparatus also by wire to relay communication between the field device and the control apparatus via wire communication.

11. The communication system according to claim 10, wherein each of the communication apparatus and the control apparatus has a switching portion which switches the communication between the communication apparatus and the control apparatus between wire communication and radio communication depending on a condition of a communication path.

12. A communication system comprising:
a plurality of radio communication apparatuses to which field devices are connected, which perform radio communication by a standardized communication protocol,
wherein radio communication is performed among the plurality of radio communication apparatuses in an ad-hoc mode, and
communication between field devices which are connected to different radio communication apparatuses is relayed.

13. A communication apparatus to which a field device is connected, wherein the communication apparatus performs radio communication by a standardized communication protocol with a control apparatus for controlling a plant where the field device is installed, and relays communication between the field device and the control apparatus.

14. A communication apparatus to which a field device is connected, and which performs radio communication by a standardized communication protocol,
wherein the communication apparatus performs radio communication with another radio communication apparatus in an ad-hoc mode, and relays communication between the field device connected to the radio communication apparatus and a field device connected to the another radio communication apparatus.
